# EUROPEAN PATENT APPLICATION

(11) **EP 4 174 983 A1**
(43) Date of publication of application: **03.05.2023**
(21) Application number: 21831777.4
(22) Date of filing: 24.06.2021
(51) Int. Cl.: H01M 4/134, H01M 4/38, H01M 4/48, H01M 4/62

(54) **NEGATIVE ELECTRODE FOR NON-AQUEOUS ELECTROLYTE SECONDARY BATTERY AND NON-AQUEOUS ELECTROLYTE SECONDARY BATTERY**

(30) Priority: 30.06.2020 JP 2020113630
(71) Applicant: Panasonic Intellectual Property Management Co., Ltd., Osaka-shi, Osaka 540-6207 (JP)
(72) Inventor: YAMAMOTO, Norihisa, Chuo-ku, Osaka-shi, Osaka 540-6207 (JP); HOJO, Nobuhiko, Chuo-ku, Osaka-shi, Osaka 540-6207 (JP); SOGA, Masahiro, Chuo-ku, Osaka-shi, Osaka 540-6207 (JP)
(74) Representative: Novagraaf International SA
(86) International application number: PCT/JP2021/023891
(87) International publication number: WO 2022/004540

(57) **Abstract**

A negative electrode for a non-aqueous electrolyte secondary battery includes a negative electrode mixture including a negative electrode active material capable of electrochemically absorbing and releasing lithium ions, carbon nanotubes, and a binder. The negative electrode active material includes a silicon-containing material, and the binder includes an acrylic polymer. The polymer includes a hydrophilic structural unit having a carboxyl group, and a hydrophobic structural unit.

## Description

### [Technical Field]

The present disclosure relates to a negative electrode for a non-aqueous electrolyte secondary battery, and a non-aqueous electrolyte secondary battery.

### [Background Art]

A non-aqueous electrolyte secondary battery represented by a lithium ion secondary battery includes a positive electrode, a negative electrode, and a non-aqueous electrolyte. The negative electrode includes a negative electrode mixture including a negative electrode active material capable of electrochemically absorbing and releasing lithium ions. For the negative electrode active material, for example, a material containing silicon that can absorb a large amount of lithium ions (Si-containing material) is used. For the purpose of increasing the conductivity of the negative electrode mixture, the use of carbon nanotubes (CNTs) in the negative electrode mixture has been studied (e.g., Patent Literature 1).

### [Citation List]

### [Patent Literature]

[PTL 1] Japanese Laid-Open Patent Publication No. 2016-110876

### [Summary of Invention]

When CNTs are included in the negative electrode mixture, conductive paths are formed, via the CNTs, between the Si-containing material and the negative electrode active material therearound. However, CNTs have hydrophobicity, and the contact points between the CNTs and the Si-containing material may not be sufficiently formed.

Moreover, for the purpose of enhancing the bonding property of the negative electrode mixture, for example, polyacrylic acid (salt) is used as a binder. However, polyacrylic acid (salt) has hydrophilicity, and does not exhibit a sufficient bonding to the hydrophobic CNTs. Therefore, the close contact between the CNTs and the Si-containing material may not be sufficiently improved, and the contact points between the CNTs and the Si-containing material may not be sufficiently formed.

Due to the insufficient formation of the contact points between the CNTs and the Si-containing material, and the insufficient formation of the conductive paths, a sufficient improvement in the cycle characteristics may not be achieved.

In view of the above, one aspect of the present disclosure relates to a negative electrode for a non-aqueous electrolyte secondary battery, including: a negative electrode mixture including a negative electrode active material capable of electrochemically absorbing and releasing lithium ions, carbon nanotubes, and a binder, wherein the negative electrode active material includes a silicon-containing material, the binder includes an acrylic polymer, and the polymer includes a hydrophilic structural unit having a carboxyl group, and a hydrophobic structural unit.

Another aspect of the present disclosure relates to a non-aqueous electrolyte secondary battery, including: a positive electrode; a negative electrode; and a non-aqueous electrolyte, wherein the negative electrode is the above-described negative electrode.

According to the present disclosure, it is possible to enhance the cycle characteristics of a non-aqueous electrolyte secondary battery.

### [Brief Description of Drawing]

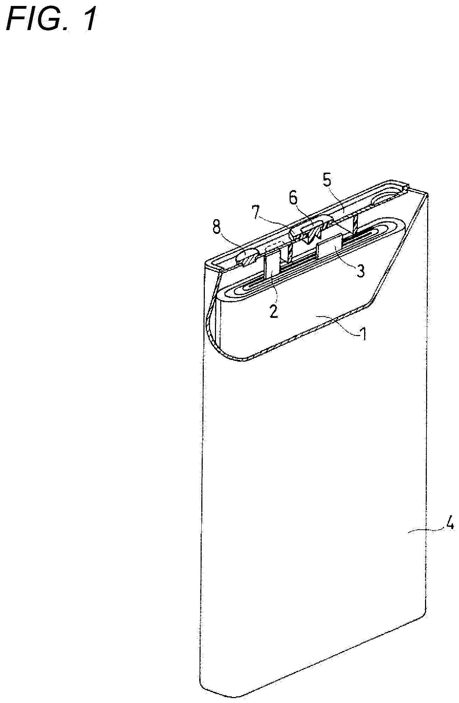

[FIG. 1] A partially cut-away schematic oblique view of a non-aqueous electrolyte secondary battery according to one embodiment of the present disclosure.

### [Description of Embodiments]

### [Negative electrode for non-aqueous electrolyte secondary battery]

A negative electrode for a non-aqueous electrolyte secondary battery according to one embodiment of the present disclosure includes a negative electrode mixture including a negative electrode active material capable of electrochemically absorbing and releasing lithium ions, carbon nanotubes (hereinafter sometimes referred to as CNTs), and a binder. The negative electrode active material includes a silicon-containing material (hereinafter sometimes referred to as a Si-containing material), and the binder includes an acrylic polymer (hereinafter sometimes simply referred to as a polymer). The acrylic polymer includes a hydrophilic structural unit having a carboxyl group, and a hydrophobic structural unit.

The acrylic polymer incudes a hydrophilic structural unit having a carboxyl group, and tends to exhibit excellent bonding to the Si-containing material. In addition, the polymer includes a hydrophobic structural unit, and tends to exhibit excellent bonding also to the CNTs. The polymer can therefore securely bring the Si-containing material and the CNTs into close contact with each other, serving to form contact points efficiently between the CNTs and the Si-containing material. As a result, via the CNTs, conductive paths (conductive network) are sufficiently formed between the Si-containing material and the negative electrode active material therearound. When the Si-containing material expands and contracts during charging and discharging, the close contact between the CNTs and the Si-containing material is securely maintained by the polymer, and the isolation of the Si-containing material (break of the conductive network) due to the above expansion and contraction is suppressed. The cycle characteristics are therefore improved.

Furthermore, the acrylic polymer includes a hydrophilic structural unit having a carboxyl group. By this, the adhesion between a negative electrode mixture layer and a negative electrode current collector can be enhanced. Also, a negative electrode having excellent lithium ion conductivity and low resistance can be easily obtained. The dispersion stability of the active material and the like in the negative electrode slurry can be improved.

In view of improving the cycle characteristics, the content of the acrylic polymer in the negative electrode mixture, relative to the whole negative electrode active material, may be 0.02 mass% or more and 1.5 mass% or less. In view of reducing the resistance of the negative electrode, ensuring a sufficient amount of the negative electrode active material, and achieving a higher capacity, the content of the polymer may be 1.0 mass% or less, relative to the whole negative electrode active material.

In view of further improving the cycle characteristics, when the average diameter of the CNTs is 5 nm or less, the content of the acrylic polymer in the negative electrode mixture, relative to the whole negative electrode active material, is preferably 0.05 mass% or more and 1.0 mass% or less, more preferably 0.05 mass% or more and 0.5 mass% or less. When the average diameter of the CNTs is greater than 5 nm, the content of the acrylic polymer in the negative electrode mixture, relative to the whole negative electrode active material, may be 0.2 mass% or more and 1.2 mass% or less, and may be 0.3 mass% or more and 1 mass% or less.

In view of improving the cycle characteristics, in the negative electrode mixture, the mass ratio of the acrylic polymer to the CNTs (hereinafter sometimes referred to as the (polymer/CNTs)) may be 0.2 or more and 600 or less.

In view of further improving the cycle characteristics, when the average diameter of the CNTs is 5 nm or less, the (acrylic polymer/CNTs) is preferably 0.6 or more and 225 or less, more preferably 2 or more and 100 or less, further more preferably 20 or more and 100 or less. When the (polymer/CNTs) is within the above range, the effect of improving the close contact between the Si-containing material and the CNTs by the polymer and the effect of forming conductive paths via the CNTs can be easily obtained in a balanced manner. When the average diameter of the CNTs is greater than 5 nm, the (polymer/CNTs) may be 0.5 or more and 3.8 or less, preferably 1.3 or more and 2.7 or less.

### (Acrylic polymer)

The acrylic polymer includes a hydrophilic structural unit having a carboxyl group, and a hydrophobic structural unit. The polymer has excellent bonding capability and can provide a securely integrated negative electrode mixture (layer). In the negative electrode mixture (layer), the close contact between the negative electrode active material containing a Si-containing material and the conductive agent containing CNTs is improved, and the conductive paths are sufficiently formed. The above close contact is maintained during charging and discharging, and the conductive paths are sufficiently maintained.

The carboxyl groups included in the polymer may be at least partially in the form of a carboxylic acid salt. The carboxylic acid salt includes, for example, an alkali metal salt of carboxylic acid. The alkali metal salt includes a sodium salt, a lithium salt, and the like. In particular, a lithium salt is preferred for the reason that the alkali metal salt is exchanged with lithium ions in liquid electrolyte.

In view of the dispersion stability of the components such as active material in the negative electrode slurry, the degree of neutralization of the polymer is, for example, 20% or more and 100% or less, preferably 50% or more and 100% or less, more preferably 60% or more and 95% or less. The degree of neutralization of the polymer refers to a proportion (molar ratio) of the carboxyl groups forming the carboxylic acid salt, to the total carboxyl groups contained in the structure.

The degree of neutralization of the structure can be determined by analyzing the polymer by infrared spectroscopy (IR), to determine a peak intensity I₁ derived from the C=O group of the carboxylic acid and a peak intensity I₂ derived from the C=O group of the carboxylic acid salt, and calculate I₂/(I₁+I₂). It can be also determined by analyzing the polymer by NMR to determine the amount of the carboxylic acid therein, followed by ICP emission spectrometry to determine the concentration of the alkali metal.

The hydrophilic structural unit preferably includes a structural unit derived from an ethylenically unsaturated carboxylic acid. In this case, favorable bonding to the Si-containing material can be easily exhibited. Examples of the ethylenically unsaturated carboxylic acid include: (meth)acrylic acid; (meth)acryl amide alkyl carboxylic acid, such as (meth)acryl amide hexanoic acid, and (meth)acryl amide dodecanoic acid; mono(methacryloyloxyethyl) succinate, ω-carboxy-caprolactone mono(meth)acrylate, and β-carboxyethyl (meth)acrylate. The ethylenically unsaturated carboxylic acid may be used singly or in combination of two or more kinds. In particular, an ethylenically unsaturated carboxylic acid having an acryloyl group is preferred, and acrylic acid is more preferred, from the viewpoint that, because of its high polymerization rate, a polymer having a long primary chain length can be obtained, and excellent bonding capability can be obtained. In the case of acrylic acid, a polymer containing many carboxyl groups tends to be obtained.

In the present specification, the "(meth)acryl" means acrylic and/or methacrylic, and the "(meth)acrylate" means acrylate and/or methacrylate. The "(meth)acrylonitrile" means acrylonitrile and/or methacrylonitrile.

The hydrophilic structural unit may be formed by (co)polymerizing a (meth)acrylic acid ester, and then hydrolyzing it, and may be formed by polymerizing (meth)acrylamide, (meth)acrylonitrile, or the like, and then treating it with a strong alkali. A polymer having a hydroxyl group may be obtained first, and then, the hydroxyl group may be reacted with a carboxylic acid anhydride.

A hydrophobic structural unit preferably includes a structural unit derived from a compound represented by a general formula: H₂C=CR¹-X (hereinafter sometimes referred to as a compound A). When a structural unit derived from the compound A is included, a strong interaction with the CNTs can be exhibited, and a favorable bonding to the CNTs tends to be exerted.

In the formula, R¹ is a hydrogen atom or a methyl group, X is COOR² or a cyano group (CN), and R² is a hydrocarbon group having 1 to 8 carbon atoms. With R² being a hydrocarbon group, the structural unit derived from the compound A has hydrophobicity. When X is COOR², the compound A is a (meth)acrylic acid ester. When X is CN, the compound A is (meth)acrylonitrile.

R² is, for example, a linear or branched alkyl group having 1 to 8 carbon atoms. Examples of such an alkyl group include methyl group, ethyl group, propyl group, isopropyl group, n-butyl group, isobutyl group, tert-butyl group, n-pentyl group, n-hexyl group, n-heptyl group, n-octyl group, and 2-ethylhexyl group.

Also, R² may be an alkyl or alkenyl group having 3 to 8 carbon atoms and having an alicyclic structure. Examples of the alkyl group having 3 to 8 carbon atoms and having an alicyclic structure include: a cycloalkyl group having 3 to 8 carbon atoms, such as cyclopropyl group, cyclobutyl group, cyclopentyl group, cyclohexyl group, cycloheptyl group, and cyclooctyl group; an alkyl-substituted cycloalkyl group having 3 to 8 carbon atoms, such as methyl cyclohexyl group, and ethyl cyclohexyl group; a cycloalkyl-substituted alkyl group having 3 to 8 carbon atoms, such as cyclopropyl methyl group, cyclopropyl ethyl group, and cyclohexyl ethyl group. Examples of the alkenyl group having 3 to 8 carbon atoms and having an alicyclic structure include a cycloalkenyl group having 3 to 8 carbon atoms, such as cyclopropenyl group, cyclobutenyl group, cyclopentenyl group, cyclohexenyl group, cycloheptenyl group, and cyclooctenyl group.

Specific examples of the compound A include: methacrylamide alkyl carboxylic acid, such as methyl methacrylate, methyl acrylate, methacrylamide hexanoic acid, and methacrylamide dodecanoic acid; mono(methacryloyloxyethyl) succinate, ω-carboxy-caprolactone monomethacrylate, and β-carboxyethyl methacrylate. In particular, methyl methacrylate and methyl acrylate are preferred in terms of their less steric hindrance.

In view of efficiently and securely forming the contact points between the CNTs and the Si-containing material, the polymer preferably includes a structural unit derived from the ethylenically unsaturated carboxylic acid and a structural unit derived from the compound A. In the acrylic structure, the ratio of the structural units derived from the compound A in the polymer to the total of the structural units derived from the ethylenically unsaturated carboxylic acid and the structural units derived from the compound A is preferably 0.5% or more and 5% or less. When the ratio of the structural units derived from the above compound A is within the above range, the polymer can easily exhibit excellent bonding to both the Si-containing material and the CNTs. The ratio of the structural units derived from the above compound A is more preferably 1% or more and 3% or less. The above ratio of the structural units derived from the compound A in the polymer is a ratio of the number of the structural units derived from the compound A to a sum of the numbers of the structural units derived from the ethylenically unsaturated carboxylic acid and the structural units derived from compound A in the polymer.

### (Method for preparing polymer)

A method for producing a polymer includes a polymerization step of polymerizing a monomer constituting a hydrophilic structural unit and a monomer constituting a hydrophobic structural unit. In the polymerization step, any known polymerization methods, such as solution polymerization, precipitation polymerization, suspension polymerization, and reversed phase emulsion polymerization, may be used. For the polymerization to proceed, a conventional polymerization reaction, such as radical polymerization, cationic polymerization, anionic polymerization, and coordination polymerization, may be utilized.

The polymerization solvent may be selected appropriately from among water, various organic solvents, and others, depending on the kind and the like of the monomers to be used. When a polymer having a long primary chain length is to be obtained, it is preferable to use a solvent having a small chain transfer constant.

The polymerization solvent may be, for example, a water-soluble organic solvent, such as methanol, tert-butyl alcohol, acetone, acetonitrile, and tetrahydrofuran. Other examples of the polymerization solvent that may be used include benzene, ethyl acetate, dichloroethane, n-hexane, cyclohexane, and n-heptane. The polymerization solvent may be used singly, or in combination of two or more kinds. The polymerization solvent may be a mixed solvent of a water-soluble organic solvent and water. The water-soluble organic solvent as used herein means an organic solvent having a solubility in water at 20 °C of 10 g/100 ml or more.

To the polymerization solvent, a small amount of a highly polar solvent may be added. In polymerizing an ethylenically unsaturated carboxylic acid having high hydrophilicity, such as acrylic acid, the addition of a highly polar solvent can improve the polymerization rate, and a polymer having a long primary chain length can be easily obtained. Furthermore, the neutralization reaction can be allowed to proceed stably and rapidly in a later-described neutralization step. The content of the highly polar solvent in the polymerization solvent is, for example, 0.05 mass% or more and 10.0 mass% or less. Examples of the highly polar solvent include water and methanol. In particular, in view of improving the polymerization rate, the highly polar solvent is preferably water.

As the polymerization initiator used in the polymerization step, any known polymerization initiators, such as an azo compound, an organic peroxide, and an inorganic peroxide, can be used. Examples of the azo compound include 2,2'-azobis(2,4-dimethylvaleronitrile). The polymerization initiator may be used singly, or in combination of two or more kinds. The using conditions can be adjusted as appropriate so that an appropriate amount of radicals are generated, by employing a known method, such as thermal initiation, redox initiation using a reducing agent, and UV initiation.

In the polymerization step, for example, a monomer of the ethylenically unsaturated carboxylic acid and the compound A are copolymerized with each other. This provides a polymer including a structural unit derived from the ethylenically unsaturated carboxylic acid and a structural unit derived from the compound A. In the above, the proportion (molar ratio) of the compound A to the total of the ethylenically unsaturated carboxylic acid and the compound A is, for example, preferably 0.5% or more and 5% or less. The proportion is more preferably 1% or more and 3% or less.

In view of obtaining a polymer whose polymerization rate is fast and which is large in molecular weight and excellent in bonding property, the degree of neutralization of the ethylenically unsaturated carboxylic acid is preferably 10% or less, more preferably 5% or less, further more preferably 0%. The degree of neutralization of the ethylenically unsaturated carboxylic acid refers to a proportion (molar ratio) of the carboxyl groups forming the carboxylic acid salt, to the total carboxyl groups contained in the ethylenically unsaturated carboxylic acid.

The ratio of the monomers (the ethylenically unsaturated carboxylic acid and the compound A) to the total of the monomers and the polymerization solvent is, for example, 2 mass% or more and 30 mass% or less. In view of obtaining a polymer having a long primary chain length, the concentration of the monomers is preferable set higher within the above range. The polymerization temperature is, for example, 0 °C or higher and 100 °C or lower. The polymerization temperature may be constant or fluctuate during the polymerization reaction. The polymerization time is, for example, 1 hour or more and 20 hours or less.

The method for producing a polymer may include a drying step of removing the dispersion medium from a liquid dispersion of the polymer obtained in the polymerization step. In the drying step, for example, pressure reduction and/or heat treatment is performed. A powdery polymer is obtained by the drying step.

The method for producing a polymer may include, after the polymerization step and before the drying step, a solid-liquid separation step of separating particles of the polymer from unreacted components by a technique, such as centrifugation and filtration, and a washing step of removing unreacted components adhering to the polymer particles using an organic solvent or a mixed solvent of water and an organic solvent. When the washing step is included, aggregates of the polymer particles are easily disintegrated, and remaining unreacted components are removed, leading to improved reliability in the bonding property of the polymer and the battery characteristics.

In the case of using a monomer having a low neutralization degree (e.g., an ethylenically unsaturated carboxylic acid) in the polymerization step, the method for producing a polymer may include a neutralization step of adding an alkaline component to the liquid dispersion of the polymer obtained in the polymerization step, to increase the neutralization degree of the polymer. The neutralization step is performed after the polymerization step and before the drying step (solid-liquid separation step). Without performing the above-described neutralization step, the neutralization degree of the polymer may be increased by obtaining a powder of a polymer having a low neutralization degree first, and then, adding an alkaline component, together with the polymer, to a negative electrode slurry in the production of a negative electrode.

### (Carbon nanotubes)

CNTs are a carbon material having a nano-sized diameter and having a structure in which a sheet of a six-membered ring network formed of carbon atoms (graphene) is wound in a tubular shape. CNTs have excellent conductivity. When the number of graphene layers constituting the tubular structure is one, the nanotubes are called single-walled CNTs (SWCNTs: single-walled carbon nanotubes). When the number of the above layers is more than one, the nanotubes are called multi-walled CNTs (MWCNT: multi-walled carbon nanotubes).

### (CNTs with average diameter of 5 nm or less)

In view of improving the cycle characteristics, the average diameter of CNTs is preferably 5 nm or less, more preferably 1 nm or more and 5 nm or less, further more preferably 1 nm or more and 3 nm or less. When the average diameter of the CNTs is 5 nm or less, the CNTs are likely to be present between the Si-containing material and the negative electrode active material therearound, and the CNTs can more easily form contact points with the Si-containing material and the negative electrode active material therearound. When the average diameter of the CNTs is 1 nm or more, the CNTs can have sufficient strength, and conductive paths are easily formed between the Si-containing material and the negative electrode active material therearound, and the above conductive paths tend to be maintained during charging and discharging.

The CNTs with an average diameter of 5 nm or less include many SWCNTs. For example, when the average diameter of the CNTs is 5 nm or less, more than 50% of the CNTs are SWCNTs. That is, the ratio of the number of the SWCNTs to the total number of the CNTs is 50% or more.

The proportion of the SWCNTs occupying the CNTs contained in the negative electrode mixture can be determined in the following manner.

A cross-sectional image of the negative electrode mixture layer or an image of the CNTs is obtained using a scanning electron microscope (SEM). In the SEM image, a plurality of (e.g., about 50 to 200) CNTs are randomly selected and observed, to determine the number of SWCNTs, and the ratio of the number of the SWCNTs to the total number of the selected CNTs is calculated. Alternatively, Raman spectroscopy may be used to determine the proportion of the SWCNTs in the CNTs.

When the CNTs with an average diameter of 5 nm or less and the polymer are included in the negative electrode mixture, since the CNTs can easily form contact points with the Si-containing material and the negative electrode active material therearound, even with a small amount of CNTs (e.g., the CNT content is 0.1 mass% or less), conductive paths can be efficiently formed. It is therefore possible to decrease the amount of CNTs and increase the amount of the negative electrode active material, and a higher capacity becomes achievable. It is also possible, in the production of a negative electrode, to decrease the amount of the CNTs contained in the negative electrode slurry. When the CNT amount in the negative electrode slurry is small, the aggregation of CNTs is suppressed, and the reliability of the obtained battery (negative electrode) is improved, and stable cycle characteristics tend to be obtained.

In view of improving the reliability and the cycle characteristics of the battery, the content of the CNTs in the negative electrode mixture, relative to the whole negative electrode active material, may be 0.1 mass% or less, may be 0.08 mass%, and may be 0.05 mass% or less. The lower limit of the content of the CNTs may be 0.001 mass%, and may be 0.003 mass%. For example, the content of the CNTs in the negative electrode mixture may be 0.0025 mass% or more and 0.1 mass% or less, and may be 0.004 mass% or more and 0.08 mass% or less, relative to the whole negative electrode active material.

In view of further improving the reliability and the cycle characteristics of the battery, the content of the CNTs in the negative electrode mixture is preferably 0.005 mass% or more and 0.05 mass% or less, more preferably 0.005 mass% or more and 0.02 mass% or less, relative to the whole negative electrode active material.

### (CNTs with average diameter greater than 5 nm)

The average diameter of the CNTs contained in the negative electrode mixture may be greater than 5 nm. The CNTs with an average diameter greater than 5 nm include many MWCNTs. For example, when the average diameter of the CNTs is greater than 5 nm, more than 50% of the CNTs are MWCNTs. That is, the ratio of the number of the MWCNTs to the total number of the CNTs exceeds 50%. The proportion of the MWCNTs occupying the CNTs contained in the negative electrode mixture can be determined in a similar manner to determining the above SWCNT proportion, by determining the number of MWCNTs using an SEM image, and calculating the ratio of the number of the MWCNTs to the total number of the selected CNTs. Alternatively, Raman spectroscopy may be used to determine the proportion of the MWCNTs in the CNTs.

In view of improving the cycle characteristics, when the average diameter of the CNTs is greater than 5 nm, the content of the CNTs in the negative electrode mixture, relative to the whole negative electrode active material, may be 0.1 mass% or more and 0.5 mass%. The content may be 0.15 mass% or more and 0.45 mass% or less.

In view of securing the conductive paths between the Si-containing material and the negative electrode active material therearound, the average length of the CNTs is preferably 1 µm or more and 100 µm or less, more preferably 5 µm or more and 20 µm or less.

The average length and the average diameter of the CNTs can be determined by obtaining a cross-sectional image of the negative electrode mixture layer or an image of the CNTs using an SEM, and in the SEM image, a plurality of (e.g., about 50 to 200) CNTs are randomly selected, to measure the length and the diameter, and averaging the measured values, respectively. The length of CNT refers to the length when extended straight.

The CNTs can be confirmed by, for example, a cross-sectional SEM image of the negative electrode mixture layer. The CNTs can be analyzed by, for example, Raman spectroscopy or thermogravimetry.

### (Si-containing material)

The Si-containing material preferably includes a composite material including a lithium ion conductive phase (matrix) and silicon particles (fine Si phase) dispersed therein. The lithium ion conductive phase preferably includes at least one selected from the group consisting of a SiO₂ phase, a silicate phase, and a carbon phase. The lithium ion conductive phase can form an amorphous phase. The stress caused by expansion and contraction of the silicon particles during charging and discharging can be relaxed by the lithium ion conductive phase. The composite material is therefore advantageous in improving the cycle characteristics. The Si-containing material may include a composite material in which silicon particles are dispersed in a SiO₂ phase, a composite material in which silicon particles are dispersed in a silicate phase, and a composite material in which silicon particles are dispersed in a carbon phase.

The SiO₂ phase is an amorphous phase containing 95 mass% or more of silicon dioxide. A composite material in which silicon particles are dispersed in a SiO₂ phase is represented by SiOₓ where x is, for example, 0.5 ≤ x < 2, preferably 0.8 ≤ x ≤ 1.6. The SiOₓ can be obtained by, for example, heat-treating silicon monoxide, and separating it into a SiO₂ phase and a fine Si phase through a disproportionation reaction.

The silicate phase preferably contains at least one of an alkali metal element (a Group I element other than hydrogen in the long periodic table) and a Group II element in the long periodic table. The alkali metal element includes, for example, lithium (Li), potassium (K), and sodium (Na). The Group II element includes, for example, magnesium (Mg), calcium (Ca), strontium (Sr), and barium (Ba). The lithium silicate phase can have a composition represented by a formula: Li_{2y}SiO_{2+y} where 0 < y < 2. The symbol y may be 1/2, and may be 1. The composite material in which silicon particles are dispersed in a silicate phase can be obtained by, for example, pulverizing a mixture of silicate and raw material silicon under stirring in a ball mill or the like, into fine particles, and then, heat-treating the mixture in an inert atmosphere.

The average particle diameter of the silicon particles dispersed in the silicate phase (before the first charging) may be 50 nm or more and 500 nm or less, and may be 100 nm or more and 400 nm or less. The average particle diameter of the silicon particles can be obtained, using a SEM cross-sectional image of the composite material, by determining the maximum diameters of any 100 silicon particles and averaging the measured values. The content of the silicon particles dispersed in the silicate phase, relative to the whole composite material, may be 30 mass% or more and 95 mass% or less, and may be 35 mass% or more and 75 mass% or less.

The carbon phase includes, for example, formless carbon with low crystallinity (amorphous carbon). The formless carbon may be, for example, graphitizable carbon (hard carbon) or non-graphitizable carbon (soft carbon). The composite material in which silicon particles are dispersed in a carbon phase can be obtained by, for example, pulverizing a mixture of a carbon source and a raw material silicon under stirring in a ball mill or the like, into fine particles, and then heat-treating the mixture in an inert atmosphere. For the carbon source, for example, saccharides, such as carboxymethyl cellulose (CMC), a water-soluble resin, such as polyvinylpyrrolidone, and the like can be used.

The composition of the Si-containing material can be determined by, for example, obtaining a reflected electron image of a cross section of the negative electrode mixture layer with a field emission scanning electron microscope (FE-SEM), to observe a particle of the Si-containing material, and performing an elemental analysis on the observed particle of the Si-containing material. For the elemental analysis, for example, electron probe microanalyzer (EPMA) analysis can be used. The composition of the lithium ion conductive phase can also be determined by the aforementioned analysis.

The Si-containing material is, for example, a particulate material. The average particle diameter (D50) of the Si-containing material is, for example, 1 µm or more and 25 µm or less, preferably 4 µm or more and 15 µm or less. In the above range, favorable battery performance tends to be obtained. In the present specification, the average particle diameter (D50) means a particle diameter (volume average particle diameter) at 50% cumulative volume in a particle size distribution measured by a laser diffraction scattering method. As the measurement instrument, for example, "LA-750" available from Horiba, Ltd. (HORIBA) can be used.

When the lithium ion conductive phase is a SiO₂ phase or a silicate phase, in view of improving the conductivity, at least part of the particle surface of the Si-containing material may be coated with an electrically conductive layer. The conductive layer contains a conductive material, such as conductive carbon. The coating amount of the conductive layer is, for example, 1 part by mass or more and 10 parts by mass or less per 100 parts by mass of the total of the Si-containing material particles and the conductive layer. The Si-containing material particles having an electrically conductive layer on its surface can be obtained by, for example, mixing coal pitch or the like with Si-containing material particles, followed by heat-treating in an inert atmosphere.

### (Carbon material)

The negative electrode active material may further contain a carbon material that electrochemically absorbs and releases lithium ions. The degree of expansion and contraction during charging and discharging of the carbon material is smaller than that of the Si-containing material. By using the Si-containing material and the carbon material in combination, during repeated charging and discharging, the condition of contact between the negative electrode active material particles and between the negative electrode mixture and the negative electrode current collector can be maintained more favorably. That is, while imparting a high capacity of the Si-containing material to the negative electrode, the cycle characteristics can be improved. In view of achieving a higher capacity and improving the cycle characteristics, the ratio of the carbon material to the total of the Si-containing material and the carbon material is preferably 98 mass% or less, more preferably 70 mass% or more and 98 mass% or less, more preferably 75 mass% or more and 95 mass% or less.

Examples of the carbon material used in the negative electrode active material include graphite, graphitizable carbon (soft carbon), and non-graphitizable carbon (hard carbon). The carbon material may be used singly, or in combination of two or more kinds.

In particular, the carbon material is preferably graphite, in terms of its excellent stability during charging and discharging and its small irreversible capacity. Examples of the graphite include natural graphite, artificial graphite, and graphitized mesophase carbon particles. The graphite particles may partially contain amorphous carbon, graphitizable carbon, and/or non-graphitizable carbon.

Graphite is a carbon material with a developed graphite-like crystal structure. The interplanar spacing d002 of the (002) plane of the graphite measured by the X-ray diffractometry may be, for example, 0.340 nm or less, and may be 0.3354 nm or more and 0.340 nm or less. The crystallite size Lc (002) of the graphite may be, for example, 5 nm or more, and may be 5 nm or more and 200 nm or less. The crystallite size Lc (002) is measured by, for example, the Scherrer method. When the interplanar spacing d002 of the (002) plane of the graphite and the crystallite size Lc (002) are within the above ranges, a high capacity is likely to be obtained.

### [Non-aqueous electrolyte secondary battery]

A non-aqueous electrolyte secondary battery according to one embodiment of the present disclosure includes a positive electrode, a negative electrode, and a non-aqueous electrolyte. As the negative electrode, the above-described negative electrode including a negative electrode mixture is used.

A detailed description will be given below of the non-aqueous electrolyte secondary battery.

### (Negative electrode)

The negative electrode may include a negative electrode current collector, and a negative electrode mixture layer supported on a surface of the negative electrode current collector. The negative electrode mixture layer can be formed by, for example, applying a negative electrode slurry of a negative electrode mixture dispersed in a dispersion medium onto a surface of a negative electrode current collector, followed by drying. The applied film after drying may be rolled as needed. The negative electrode mixture layer may be formed on a surface of one side or both sides of the negative electrode current collector.

The negative electrode mixture includes, as essential components, a negative electrode active material, CNTs, and an acrylic polymer. The negative electrode mixture may include, as optional components, an electrically conductive agent other than CNTs, a binder other than the polymer, and the like.

Examples of the conductive agent other than CNTs include: carbons, such as acetylene black; and metals, such as aluminum. The conductive agent may be used singly, or in combination of two or more kinds.

The binder other than the polymer may be, for example, a resin material other than the polymer (acrylic polymer). Examples of such a resin material include: fluorocarbon resin, such as polytetrafluoroethylene and polyvinylidene fluoride (PVDF); polyolefin resin, such as polyethylene and polypropylene; polyamide resin, such as aramid resin; and polyimide resin, such as polyimide and polyamide-imide. As the binder, a rubbery material, such as styrene-butadiene copolymer rubber (SBR) may be used.

As the binder, carboxymethyl cellulose (CMC) and a modified product thereof (including a salt, such as Na salt), a cellulose derivative (e.g., cellulose ether), such as methyl cellulose, and the like, may also be used. The binder may be used singly or in combination of two or more kinds.

Examples of the dispersion medium include, but are not limited thereto, water, alcohols such as ethanol, ethers such as tetrahydrofuran, amides such as dimethylformamide, N-methyl-2-pyrrolidone (NMP), and a mixed solvent of these.

Examples of the negative electrode current collector include a non-porous electrically conductive substrate (e.g., metal foil), and a porous electrically conductive substrate (e.g., mesh, net, punched sheet). The negative electrode current collector may be made of, for example, stainless steel, nickel, a nickel alloy, copper, or a copper alloy. The thickness of the negative electrode current collector is not limited, but is preferably 1 to 50 µm, more preferably 5 to 20 µm.

### (Positive electrode)

The positive electrode may include a positive electrode current collector, and a positive electrode mixture layer supported on a surface of the positive electrode current collector. The positive electrode mixture layer can be formed by, for example, applying a positive electrode slurry of a positive electrode mixture dispersed in a dispersion medium, such as NMP, onto a surface of a positive electrode current collector, followed by drying. The applied film after drying may be rolled as needed. The positive electrode mixture layer may be formed on a surface of one side or both sides of the positive electrode current collector. The positive electrode mixture includes, as an essential component, a positive electrode active material, and may include, as optional components, a binder, an electrically conductive agent, and the like.

As the positive electrode active material, for example, a composite oxide containing lithium and a transition metal is used. Examples of the transition metal include Ni, Co, and Mn. Examples of the composite oxide containing lithium and a transition metal include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, and LiₐMn_{2-b}M_{b}O₄. Here, a = 0 to 1.2, b = 0 to 0.9, and c = 2.0 to 2.3. M is at least one selected from the group consisting of Na, Mg, Sc, Y, Mn, Fe, Co, Ni, Cu, Zn, Al, Cr, Pb, Sb, and B. The value a representing the molar ratio of lithium is subjected to increase and decrease during charging and discharging.

In particular, preferred is a lithium-nickel composite oxide represented by LiₐNi_{b}M_{1-b}O₂, where 0 < a ≤ 1.2, 0.3 ≤ b ≤ 1, and M is at least one selected from the group consisting of Mn, Co and Al. In view of achieving a higher capacity, b preferably satisfies 0.85 ≤ b ≤ 1. In view of the stability of the crystal structure, more preferred is LiₐNi_{b}Co_{c}Al_{d}O₂, where 0 < a ≤ 1.2, 0.85 ≤ b <1, 0 < c < 0.15, 0 < d ≤ 0.1, and b + c + d = 1.

As the binder, a resin material as exemplified for the negative electrode can be used. As the conductive agent, a conducive agent as exemplified for the negative electrode can be used. The conductive agent may be graphite, such as natural graphite and artificial graphite.

The form and the thickness of the positive electrode current collector may be respectively selected from the forms and the range corresponding to those of the negative electrode current collector. The positive electrode current collector may be made of, for example, stainless steel, aluminum, an aluminum alloy, and titanium.

### [Non-aqueous electrolyte]

The non-aqueous electrolyte includes a non-aqueous solvent, and a lithium salt dissolved in the non-aqueous solvent. The concentration of the lithium salt in the non-aqueous electrolyte is preferably, for example, 0.5 mol/L or more and 2 mol/L or less. By setting the lithium salt concentration in the above range, a non-aqueous electrolyte having excellent ion conductivity and appropriate viscosity can be obtained. However, the lithium salt concentration is not limited to the above.

As the non-aqueous solvent, for example, a cyclic carbonic acid ester, a chain carbonic acid ester, a cyclic carboxylic acid ester, a chain carboxylic acid ester, and the like can be used. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The non-aqueous solvent may be used singly or in combination of two or more kinds.

As the lithium salt, for example, LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, imides, and like can be used. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). The lithium salt may be used singly or in combination of two or more kinds.

### (Separator)

Usually, it is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of, for example, polyolefin, such as polypropylene and polyethylene.

The non-aqueous electrolyte secondary battery, for example, has a structure in which an electrode group formed by winding the positive electrode and the negative electrode with the separator interposed therebetween is housed in an outer body, together with the non-aqueous electrolyte. The wound electrode group may be replaced with a different form of electrode group, for example, a stacked electrode group formed by stacking the positive electrode and the negative electrode with the separator interposed therebetween. The non-aqueous electrolyte secondary battery may be in any form, such as cylindrical type, prismatic type, coin type, button type, or laminate type.

The structure of a prismatic non-aqueous electrolyte secondary battery as an example of the non-aqueous electrolyte secondary battery according to the present disclosure will be described below with reference to FIG. 1. FIG. 1 is a schematic partially cut-away oblique view of a non-aqueous electrolyte secondary battery according to one embodiment of the present disclosure.

The battery includes a bottomed prismatic battery case 4, and an electrode group 1 and a non-aqueous electrolyte housed in the battery case 4. The electrode group 1 has a long negative electrode, a long positive electrode, and a separator interposed between the positive electrode and the negative electrode and preventing them from directly contacting with each other. The electrode group 1 is formed by winding the negative electrode, the positive electrode, and the separator around a flat plate-like winding core, and then removing the winding core.

To the negative electrode current collector of the negative electrode, a negative electrode lead 3 is attached at its one end, by means of welding or the like. The negative electrode lead 3 is electrically connected at its other end to a negative electrode terminal 6 disposed at a sealing plate 5. The negative electrode terminal 6 is electrically insulated from the sealing plate 5 by a resin gasket 7. To the positive electrode current collector of the positive electrode, a positive electrode lead 2 is attached at its one end, by welding or the like. The positive electrode lead 2 is connected at its other end to the back side of the sealing plate 5 via an insulating plate. That is, the positive electrode lead 2 is electrically connected to the battery case 4 serving as a positive electrode terminal. The insulating plate provides electrical insulation between the electrode group 1 and the sealing plate 5 and between the negative electrode lead 3 and the battery case 4. The periphery of the sealing plate 5 is engaged with the opening end of the battery case 4, and the engaging portion is laser-welded. In this way, the opening of battery case 4 is sealed with the sealing plate 5. An injection port for liquid electrolyte provided in the sealing plate 5 is closed with a sealing plug 8.

### [Examples]

In the following, Examples of the present disclosure will be more specifically described. It is to be noted, however, that the present invention is not limited to the following Examples.

### «Examples 1 to 12»

### [Production of acrylic polymer]

A polymer including a hydrophilic structural unit derived from acrylic acid and a hydrophobic structural unit derived from methyl acrylate was obtained in the following manner.

Acrylic acid (available from Osaka Organic Chemical Industry, Ltd.) was used as a hydrophilic monomer, and methyl acrylate (available from Mitsubishi Rayon Co., Ltd.) was used as a hydrophobic monomer. The both were distilled under reduced pressure prior to use. Lithium persulfate (available from FUJIFILM Wako Pure Chemical Industries, Ltd.) was used as a polymerization initiator. A macromolecular polymer was prepared through radical polymerization. First, a total of 40 g of acrylic acid and methyl acrylate, 350 g of acetonitrile, and 1.8 g of pure water were placed in a glass ampoule with a stopper (reaction vessel). The mass ratio of the acrylic acid and the methyl acrylate fed into the ampoule was set to the value (parts by mass) as shown in Table 1. After the internal atmosphere of the ampoule was fully replaced with nitrogen, the ampoule was sealed, followed by heating to raise the temperature inside the ampoule to 55 °C. Then, 0.04 g of the polymerization initiator was fed, and invert stirring was performed for 12 hours in a constant temperature bath, to allow a polymerization reaction to proceed to the degree of polymerization of 90%. Cooling of the reaction solution was then started, and after the reaction solution was cooled until its internal temperature reached 25 °C, 20.6 g of powder of lithium hydroxide monohydrate (LiOH·H₂O, available from Kishida Chemical Co., Ltd.) was added to the reaction solution. Then, the reaction solution was invert-stirred at room temperature for 12 hours, to obtain a slurry-like polymerization reaction solution. The polymerization reaction solution was centrifuged, to remove the supernatant. Thereafter, an operation of re-dispersing the sediment in acetonitrile of the same mass as that of the polymerization reaction solution, and then, allowing a polymer to settle by centrifugation, to remove the supernatant was repeated three times in total. The resulting sediment was dried at 80 °C for 2 hours under reduced pressure, to remove volatile matter, and a polymer was thus obtained.

In Example 1, the ratio of the hydrophobic structural units to the total of the hydrophilic structural units and the hydrophobic structural units in the obtained polymer was 2%. In Example 11, the ratio of the hydrophobic structural units to the total of the hydrophilic structural units and the hydrophobic structural units in the obtained polymer was 0.5%. In Example 12, the ratio of the hydrophobic structural units to the total of the hydrophilic structural units and the hydrophobic structural units in the obtained polymer was 5%.

### [Production of negative electrode]

An appropriate amount of water was added to a negative electrode mixture, and mixed together, to obtain a negative electrode slurry. The negative electrode mixture used here was a mixture of a negative electrode active material, a binder, and a conductive agent.

As the negative electrode active material, a mixture of a Si-containing material and graphite (average particle diameter (D50): 25 µm) was used. In the negative electrode active material, the mass ratio of the Si-containing material to the graphite was set to 10:90. As the Si-containing material, SiOₓ particles (x = 1, average particle diameter (D50): 5 µm) with surfaces coated with a conductive layer containing conductive carbon were used. The coating amount of the conductive layer was 5 parts by mass per 100 parts by mass of the total of the SiOₓ particles and the conductive layer.

As the binder, an acrylic polymer, sodium carboxymethyl cellulose (CMC-Na), and styrene-butadiene rubber (SBR) were used. The polymer obtained above was used as the acrylic polymer.

As the conductive agent, CNTs (average diameter: 1.6 nm, average length: 5 µm) containing 90% or more of single-walled CNTs (SWCNTs) were used.

The contents of the CNTs and the polymer in the negative electrode mixture (mass ratio to the whole negative electrode active material) were set to the values as shown in Table 1, respectively. The content of CMC-Na in the negative electrode mixture was set to 1 mass%, relative to the whole negative electrode active material. The content of SBR in the negative electrode mixture was set to 1.5 mass%, relative to the whole negative electrode active material.

Next, the negative electrode slurry was applied onto a surface of copper foil, and the applied film was dried, and then rolled, to form a negative electrode mixture layer (thickness: 80 µm, density: 1.6 g/cm³) on both sides of the copper foil. A negative electrode was thus obtained.

### [Production of positive electrode]

To 95 parts by mass of lithium-containing composite oxide (LiNi_{0.8}Co_{0.18}Al_{0.02}O₂), 2.5 parts by mass of acetylene black, 2.5 parts by mass of polyvinylidene fluoride, and an appropriate amount of N-methyl-2-pyrrolidone (NMP) were added and mixed, to obtain a positive electrode slurry. Next, the positive electrode slurry was applied onto a surface of aluminum foil, and the applied film was dried, and then rolled, to form a positive electrode mixture layer (thickness: 95 µm, density: 3.6 g/cm³) on both sides of the aluminum foil. A positive electrode was thus obtained.

### [Preparation of non-aqueous electrolyte]

To a mixed solvent of ethylene carbonate (EC) and dimethyl carbonate (DMC) (3:7 by volume), LiPF₆ was dissolved at a concentration of 1.0 mol/L, to obtain a non-aqueous electrolyte.

### [Fabrication of non-aqueous electrolyte secondary battery]

A positive electrode lead made of Al was attached to the positive electrode obtained above, and a negative electrode lead made of Ni was attached to the negative electrode obtained above. In an inert gas atmosphere, the positive electrode and the negative electrode were spirally wound with a polyethylene thin film (separator) interposed therebetween, to prepare a wound electrode group. The electrode group was housed in a bag-shaped outer body formed of a laminate sheet having an Al layer, and after the above non-aqueous electrolyte was injected, the outer body was sealed, to complete a non-aqueous electrolyte secondary battery. When the electrode group was housed in the outer body, the positive electrode lead and the negative electrode lead were each partially exposed outside the outer body.

In Table 1, non-aqueous electrolyte secondary batteries of Examples 1 to 12 are denoted as A1 to A12, respectively.

### <<Comparative Example 1>>

A polymer was produced in the same manner as in Example 1, except that in the production of a polymer, methyl acrylate was not fed into the reaction vessel. The resulting polymer did not contain the hydrophobic structural unit derived from methyl acrylate.

In the production of a negative electrode, the above-obtained polymer not containing the hydrophobic structural unit was used as the acrylic polymer. Except for the above, a battery B1 of Comparative Example 1 was fabricated in the same manner as the battery A1 of Example 1.

### <<Comparative Example 2>>

A battery B2 of Comparative Example 2 was fabricated in the same manner as the battery A1 of Example 1, except that the CNTs were not included in the negative electrode mixture in the production of a negative electrode.

### <<Comparative Example 3>>

A battery B3 of Comparative Example 3 was fabricated in the same manner as the battery A1 of Example 1, except that the polymer was not included in the negative electrode mixture in the production of a negative electrode.

### <<Comparative Example 4>>

A battery B4 of Comparative Example 4 was fabricated in the same manner as the battery B1 of Comparative Example 1, except that the CNTs were not included in the negative electrode mixture in the production of a negative electrode.

### <<Comparative Example 5>>

A battery B5 of Comparative Example 5 was fabricated in the same manner as the battery A1 of Example 1, except that neither the CNTs nor the polymer was included in the negative electrode mixture in the production of a negative electrode.

The batteries obtained above were each subjected to the following evaluation.

### [Charge-discharge cycle test]

### (Charging)

A constant-current charging was performed at a current of 0.5 C (180 mA) until the voltage reached 4.2 V, and then a constant-voltage charging was performed at a voltage of 4.2 V until the current reached 0.05 C (18 mA).

### (Discharging)

A constant-current discharging was performed at 0.7 C (252 mA) until the voltage reached 2.5 V

The rest time between charging and discharging was 10 minutes. The charging and discharging were performed in a 25 °C environment.

The charging and discharging were repeated under the above conditions. The ratio (percentage) of the discharge capacity at the 100th cycle to the discharge capacity at the 1st cycle was determined as a cycle capacity retention rate. The evaluation results are shown in Table 1.

**[Table 1]**

| | Battery | Polymer Amount of material charged (parts by mass) | | Negative electrode mixture | | | | Evaluation |
|---|---|---|---|---|---|---|---|---|
| | | Acrylic acid | Methyl acrylate | CNTs Ave. diameter (nm) | Polymer content (mass%) | CNT content (mass%) | Mass ratio (Polymer/CNTs) | Capacity retention rate at 100^{th} cycle (%) |
| Ex. 1 | A1 | 98 | 2 | 1.6 | 1.5 | 0.0025 | 600 | 94.3 |
| Ex. 2 | A2 | 98 | 2 | 1.6 | 1.5 | 0.003 | 500 | 95.2 |
| Ex. 3 | A3 | 98 | 2 | 1.6 | 0.9 | 0.004 | 225 | 95.6 |
| Ex. 4 | A4 | 98 | 2 | 1.6 | 0.5 | 0.005 | 100 | 96.0 |
| Ex. 5 | A5 | 98 | 2 | 1.6 | 0.5 | 0.01 | 50 | 96.0 |
| Ex. 6 | A6 | 98 | 2 | 1.6 | 0.4 | 0.02 | 20 | 96.0 |
| Ex. 7 | A7 | 98 | 2 | 1.6 | 0.2 | 0.03 | 7 | 95.8 |
| Ex. 8 | A8 | 98 | 2 | 1.6 | 0.1 | 0.05 | 2 | 95.8 |
| Ex. 9 | A9 | 98 | 2 | 1.6 | 0.05 | 0.08 | 0.6 | 95.6 |
| Ex. 10 | A10 | 98 | 2 | 1.6 | 0.02 | 0.1 | 0.2 | 95.4 |
| Ex. 11 | A11 | 99.5 | 0.5 | 1.6 | 0.5 | 0.01 | 50 | 96.0 |
| Ex. 12 | A12 | 95 | 5 | 1.6 | 0.5 | 0.01 | 50 | 96.0 |
| Com. Ex. 1 | B1 | 100 | 0 | 1.6 | 1.5 | 0.0025 | 600 | 92.3 |
| Com. Ex. 2 | B2 | 98 | 2 | - | 1.5 | 0 | - | 92.4 |
| Com. Ex. 3 | B3 | - | - | 1.6 | 0 | 0.0025 | 0 | 92.9 |
| Com. Ex. 4 | B4 | 100 | 0 | - | 1.5 | 0 | - | 91.8 |
| Com. Ex. 5 | B5 | - | - | - | 0 | 0 | - | 91.2 |

In the batteries A1 to A12, as compared to in the batteries B1 to B5, a high capacity retention rate was obtained. In particular, in the batteries A3 to A9 in which the CNT content was 0.004 mass% or more and 0.08 mass% or less, and the mass ratio of the polymer to the CNTs was 0.6 or more and 225 or less, a higher capacity retention rate was obtained.

### «Examples 13 to 24»

In the production of a negative electrode, CNTs containing 90% or more of MWCNTs (average diameter 10 nm, average length 5 µm) were used as the conductive agent. The mass ratio of the acrylic acid to the methyl acrylate to be fed into the reaction vessel when producing a polymer, and the CNT content and the polymer content in the negative electrode mixture (mass ratio relative to the whole negative electrode active material) were set to the values as shown in Table 2.

Except for the above, in the same manner as the battery A1 of Example 1, batteries C1 to C12 of Examples 13 to 24 were fabricated and evaluated. The evaluation results are shown in Table 2.

**[Table 2]**

| | Battery | Polymer Amount of material charged (parts bv mass) | | Negative electrode mixture | | | | Evaluation |
|---|---|---|---|---|---|---|---|---|
| | | Acrylic acid | Methyl acrylate | CNTs Ave. diameter (nm) | Polymer content (mass%) | CNT content (mass%) | Mass ratio (Polymer/CNTs) | Capacity retention rate at 100^{th} cycle (%) |
| Ex. 13 | C1 | 98 | 2 | 10 | 1.5 | 0.4 | 3.8 | 94.2 |
| Ex. 14 | C2 | 98 | 2 | 10 | 1.5 | 0.5 | 3 | 94.3 |
| Ex. 15 | C3 | 98 | 2 | 10 | 1.2 | 0.45 | 2.7 | 94.7 |
| Ex. 16 | C4 | 98 | 2 | 10 | 1 | 0.4 | 2.5 | 95.1 |
| Ex. 17 | C5 | 98 | 2 | 10 | 0.8 | 0.35 | 2.3 | 95.1 |
| Ex. 18 | C6 | 98 | 2 | 10 | 0.6 | 0.3 | 2 | 95.1 |
| Ex. 19 | C7 | 98 | 2 | 10 | 0.3 | 0.2 | 1.5 | 94.9 |
| Ex. 20 | C8 | 98 | 2 | 10 | 0.2 | 0.15 | 1.3 | 94.7 |
| Ex. 21 | C9 | 98 | 2 | 10 | 0.1 | 0.1 | 1 | 94.5 |
| Ex. 22 | C10 | 98 | 2 | 10 | 0.05 | 0.1 | 0.5 | 94.1 |
| Ex. 23 | C11 | 99.5 | 0.5 | 10 | 0.6 | 0.3 | 2 | 95.1 |
| Ex. 24 | C12 | 95 | 5 | 10 | 0.6 | 0.3 | 2 | 95.2 |

In the batteries C1 to C12, too, a high capacity retention rate was obtained. Especially in the batteries C3 to C8 in which the CNT content was 0.15 mass% or more and 0.45 mass% or less, and the mass ratio of the polymer to the CNTs was 1.3 or more and 2.7 or less, a higher capacity retention rate was obtained.

### [Industrial Applicability]

A non-aqueous electrolyte secondary battery according to the present disclosure is useful as a main power source for mobile communication equipment, portable electronic equipment, and other similar devices.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing plug

## Claims

1. A negative electrode for a non-aqueous electrolyte secondary battery, comprising:
a negative electrode mixture including a negative electrode active material capable of electrochemically absorbing and releasing lithium ions, carbon nanotubes, and a binder, wherein
the negative electrode active material includes a silicon-containing material,
the binder includes an acrylic polymer, and
the polymer includes a hydrophilic structural unit having a carboxyl group, and a hydrophobic structural unit.

2. The negative electrode for a non-aqueous electrolyte secondary battery according to claim 1, wherein
the polymer includes
the hydrophilic structural unit, which is derived from an ethylenically unsaturated carboxylic acid, and
the hydrophobic structural unit, which is derived from a compound represented by a general formula: H₂C=CR¹-X where R¹ is a hydrogen atom or a methyl group, X is COOR² or a cyano group, and R² is a hydrocarbon group having 1 to 8 carbon atoms.

3. The negative electrode for a non-aqueous electrolyte secondary battery according to claim 1 or 2, wherein in the polymer, a ratio of the hydrophobic structural units to a total of the hydrophilic structural units and the hydrophobic structural units is 0.5% or more and 5% or less.

4. The negative electrode for a non-aqueous electrolyte secondary battery according to claim 1 or 2, wherein in the polymer, a ratio of the hydrophobic structural units to a total of the hydrophilic structural units and the hydrophobic structural units is 1% or more and 3% or less.

5. The negative electrode for a non-aqueous electrolyte secondary battery according to any one of claims 1 to 4, wherein
the carboxyl groups are at least partially in a form of a carboxylic acid salt, and
the salt includes a lithium salt.

6. The negative electrode for a non-aqueous electrolyte secondary battery according to any one of claims 1 to 5, wherein an average diameter of the carbon nanotubes is 5 nm or less.

7. The negative electrode for a non-aqueous electrolyte secondary battery according to claim 6, wherein a content of the carbon nanotubes in the negative electrode mixture, relative to the whole negative electrode active material, is 0.0025 mass% or more and 0.1 mass% or less.

8. The negative electrode for a non-aqueous electrolyte secondary battery according to claim 6, wherein a content of the carbon nanotubes in the negative electrode mixture, relative to the whole negative electrode active material, is 0.004 mass% or more and 0.08 mass% or less.

9. The negative electrode for a non-aqueous electrolyte secondary battery according to claim 6, wherein in the negative electrode mixture, a mass ratio of the polymer to the carbon nanotubes is 0.2 or more and 600 or less.

10. The negative electrode for a non-aqueous electrolyte secondary battery according to claim 6, wherein in the negative electrode mixture, a mass ratio of the polymer to the carbon nanotubes is 0.6 or more and 225 or less.

11. The negative electrode for a non-aqueous electrolyte secondary battery according to any one of claims 6 to 10, wherein 50% or more of the carbon nanotubes are single-walled carbon nanotubes.

12. The negative electrode for a non-aqueous electrolyte secondary battery according to any one of claims 1 to 5, wherein an average diameter of the carbon nanotubes is greater than 5 nm.

13. The negative electrode for a non-aqueous electrolyte secondary battery according to claim 12, wherein a content of the carbon nanotubes in the negative electrode mixture, relative to the whole negative electrode active material, is 0.1 mass% or more and 0.5 mass% or less.

14. The negative electrode for a non-aqueous electrolyte secondary battery according to claim 12, wherein a content of the carbon nanotubes in the negative electrode mixture, relative to the whole negative electrode active material, is 0.15 mass% or more and 0.45 mass% or less.

15. The negative electrode for a non-aqueous electrolyte secondary battery according to claim 12, wherein in the negative electrode mixture, a mass ratio of the polymer to the carbon nanotubes is 0.5 or more and 3.8 or less.

16. The negative electrode for a non-aqueous electrolyte secondary battery according to claim 12, wherein in the negative electrode mixture, a mass ratio of the polymer to the carbon nanotubes is 1.3 or more and 2.7 or less.

17. The negative electrode for a non-aqueous electrolyte secondary battery according to any one of claims 12 to 16, wherein more than 50% of the carbon nanotubes are multi-walled carbon nanotubes.

18. The negative electrode for a non-aqueous electrolyte secondary battery according to any one of claims 1 to 17, wherein a content of the polymer in the negative electrode mixture, relative to the whole negative electrode active material, is 0.02 mass% or more and 1.5 mass% or less.

19. A non-aqueous electrolyte secondary battery, comprising:
a positive electrode; a negative electrode; and a non-aqueous electrolyte, wherein
the negative electrode is the negative electrode of any one of claims 1 to 18.
